# EUROPEAN PATENT APPLICATION

(11) **EP 2 509 300 A1**
(43) Date of publication of application: **10.10.2012**
(21) Application number: 12163215.2
(22) Date of filing: 04.04.2012
(51) Int. Cl.: H04N 5/225, H04N 5/232, H04N 5/235

(54) **Controllable LED video camera system**

(30) Priority: 05.04.2011 US 201161472092 P
(71) Applicant: American DJ Supply, Inc., Los Angeles, CA 90040 (US)
(72) Inventor: Velazquez, Toby, Yorba Linda, CA California 92886 (US)
(74) Representative: Price, Nigel John King

(57) **Abstract**

Embodiments of the present invention provide a light emitting diode (LED) video camera system comprising a movable video camera apparatus including a video camera having a lens. The movable video camera apparatus further includes a plurality of LED lights arranged around at least a portion of a periphery of the lens of the video camera. The LED video camera system further comprises an actuator for panning and tilting the video camera, and a control unit for controlling the actuator, the lens of the video camera, and the LED lights. The control unit comprises a plurality of drivers, including an LED driver for controlling lighting effects of the LED lights, an actuator driver for controlling movement of the actuator, and an optics driver for controlling zooming and focusing of the lens of the video camera.

## Description

### BACKGROUND

The present invention relates generally to light emitting diode (LED) lighting systems, and in particular, to a controllable LED video camera system.

LED lighting systems are used for illuminating both indoor and outdoor environments. Proper illumination is vital when filming movies, television shows, shooting videos, taking photographs, lighting live stage performances, and other similar activities.

### BRIEF SUMMARY

Embodiments of the present invention provide a light emitting diode (LED) video camera system comprising a movable video camera apparatus including a video camera having a lens. The movable video camera apparatus further includes a plurality of LED lights arranged around at least a portion of a periphery of the lens of the video camera. The LED video camera system further comprises an actuator for panning and tilting the video camera, and a control unit for controlling the actuator, the lens of the video camera, and the LED lights. The control unit comprises a plurality of drivers, including an LED driver for controlling lighting effects of the LED lights, an actuator driver for controlling movement of the actuator, and an optics driver for controlling zooming and focusing of the lens of the video camera.

In another embodiment, the present invention provides a light emitting diode video camera fixture system comprising a plurality of LED video camera fixtures. Each LED video camera fixture comprises a movable video camera apparatus including a video camera having a lens. The camera apparatus further includes a plurality of LED lights arranged around at least a portion of a periphery of the lens of the video camera. Each LED video camera fixture further comprises an actuator for moving the camera apparatus including panning and tilting the video camera, and a control unit for controlling the actuator, the lens of the video camera, and the LED lights.

In yet another embodiment, the present invention provides a method of forming a movable light emitting diode video camera system. The method comprises providing a video camera having a lens, arranging a plurality of LED lights around at least a portion of a periphery of the lens of the video camera. The method further comprises panning and tilting the video camera using an actuator, and controlling the actuator, the lens of the video camera, and the LED lights using a control unit.

These and other features, aspects and advantages of the present invention will become understood with reference to the following description, appended claims and accompanying figures.

### BRIEF DESCRIPTION OF THE SEVERAL VIEWS OF THE DRAWINGS

**FIG. 1** shows a front perspective view of a light emitting diode (LED) video camera system, in accordance with an embodiment of the invention.

**FIG. 2A** is a block diagram illustrating components of a LED video camera system, in accordance with an embodiment of the invention.

**FIG. 2B** is a block diagram illustrating a control unit of a LED video camera system, in accordance with an embodiment of the invention.

**FIG. 2C** is a block diagram illustrating a control unit of a LED video camera system 100, wherein the control unit includes a wireless DMX (Digital Multiplex) module for wirelessly receiving DMX data signals from a remote wireless DMX controller, in accordance with an embodiment of the invention.

**FIG. 3** illustrates a close-up view of a video camera of a LED video camera system, in accordance with an embodiment of the invention.

**FIG. 4** illustrates a bottom view of a LED video camera system, in accordance with an embodiment of the invention.

**FIG. 5** illustrates an interface board of a LED video camera system, in accordance with an embodiment of the invention.

**FIG. 6A** illustrates a front upside-down perspective view of a LED video camera system, in accordance with an embodiment of the invention.

**FIG. 6B** illustrates a side perspective view of a LED video camera system, in accordance with an embodiment of the invention.

**FIG. 6C** illustrates a back perspective view of a LED video camera system, in accordance with an embodiment of the invention.

**FIG. 7A** illustrates a front view of a LED video camera system, wherein a video camera of the LED video camera system is tilted about a substantially ninety degree angle from a forward-looking position to an upward-looking position, in accordance with an embodiment of the invention.

**FIG. 7B** illustrates a back perspective view of a LED video camera system, wherein a video camera of the LED video camera system is panned about a substantially ninety degree angle and tilted about a substantially forty-five degree angle from a forward-looking position, in accordance with an embodiment of the invention.

**FIG. 8A** illustrates a back perspective view of a LED video camera system, wherein a video camera of the LED video camera system is panned about a substantially one-hundred eighty degree angle from a forward-looking position to a backward-looking position, in accordance with an embodiment of the invention.

**FIG. 8B** illustrates a back view of a LED video camera system, wherein a video camera of the LED video camera system is panned about a substantially one-hundred eighty degree angle from a forward-looking position to a backward-looking position, in accordance with an embodiment of the invention.

**FIG. 8C** illustrates a front view of the LED video camera system, wherein a video camera of the LED video camera system is panned about a substantially one-hundred eighty degree angle from a forward-looking position to a backward-looking position, in accordance with an embodiment of the invention.

**FIG. 8D** illustrates a side view of a LED video camera system, wherein a video camera of the LED video camera system is panned about a substantially one-hundred eighty degree angle from a forward-looking position to a backward-looking position, in accordance with an embodiment of the invention.

**FIG. 8E** illustrates an alternate side view of a LED video camera system, wherein a video camera of the LED video camera system is panned about a substantially one-hundred eighty degree angle from a forward-looking position to a backward-looking position, in accordance with an embodiment of the invention.

**FIG. 8F** illustrates a top view of a LED video camera system, wherein a video camera of the LED video camera system is panned about a substantially one-hundred eighty degree angle from a forward-looking position to a backward-looking position, in accordance with an embodiment of the invention.

**FIG. 9** is a block diagram illustrating multiple LED video camera systems arranged in a parallel video capture circuit, in accordance with an embodiment of the invention.

**FIG. 10** is a block diagram illustrating multiple LED video camera systems linked in a daisy-chain video capture circuit, in accordance with an embodiment of the invention.

**FIG. 11** illustrates the daisy-chain video capture circuit in FIG. 10.

### DETAILED DESCRIPTION

The present invention relates generally to light emitting diode (LED) lighting systems, and in particular, to a controllable LED video camera system. Embodiments of the present invention provide a light emitting diode (LED) video camera system comprising a movable video camera apparatus including a video camera having a lens. The movable video camera apparatus further includes a plurality of LED lights arranged around at least a portion of a periphery of the lens of the video camera. The LED video camera system further comprises an actuator for panning and tilting the video camera, and a control unit for controlling the actuator, the lens of the video camera, and the LED lights. The control unit comprises a plurality of drivers, including an LED driver for controlling lighting effects of the LED lights, an actuator driver for controlling movement of the actuator, and an optics driver for controlling zooming and focusing of the lens of the video camera.

The LED video camera system further comprises an interface board. The interface board comprises a power socket for receiving power, a video output coupler for transmitting video signals including video captured by the video camera, a data input socket for receiving data control signals, and a data output socket for transmitting data control signals. The control unit controls the actuator, the lens of the video camera, and the LED lights based on the data control signals received.

In one example implementation, the data input socket receives data control signals from a controller. The controller is a Digital Multiplex (DMX) controller, and the received data control signals include DMX data instructions.

The interface board further comprises an LCD display screen, a plurality of manual control buttons, and a plurality of LED indicator lights. A user can utilize the LCD display screen, the buttons, and the indicator lights to control the lighting effects of the LED lights, the movement of the actuator, and the zooming and focusing of the lens of the video camera.

The actuator can pan the video camera about a substantially five hundred forty degree angle about a vertical axis. The actuator can also tilt the video camera about a substantially two hundred and seventy degree angle about a horizontal axis.

The LED video camera system further comprises a detachable mounting bracket for mounting the LED video camera system to one of the following supporting surfaces or structures: a floor stand, a wall, a lighting grid, a ceiling, and a truss.

In another embodiment, the present invention provides a light emitting diode video camera fixture system comprising a plurality of LED video camera fixtures. Each LED video camera fixture comprises a movable video camera apparatus including a video camera having a lens. The camera apparatus further includes a plurality of LED lights arranged around at least a portion of a periphery of the lens of the video camera. Each LED video camera fixture further comprises an actuator for moving the camera apparatus including panning and tilting the video camera, and a control unit for controlling the actuator, the lens of the video camera, and the LED lights.

In yet another embodiment, the present invention provides a method of forming a movable light emitting diode video camera system. The method comprises providing a video camera having a lens, arranging a plurality of LED lights around at least a portion of a periphery of the lens of the video camera. The method further comprises panning and tilting the video camera using an actuator, and controlling the actuator, the lens of the video camera, and the LED lights using a control unit.

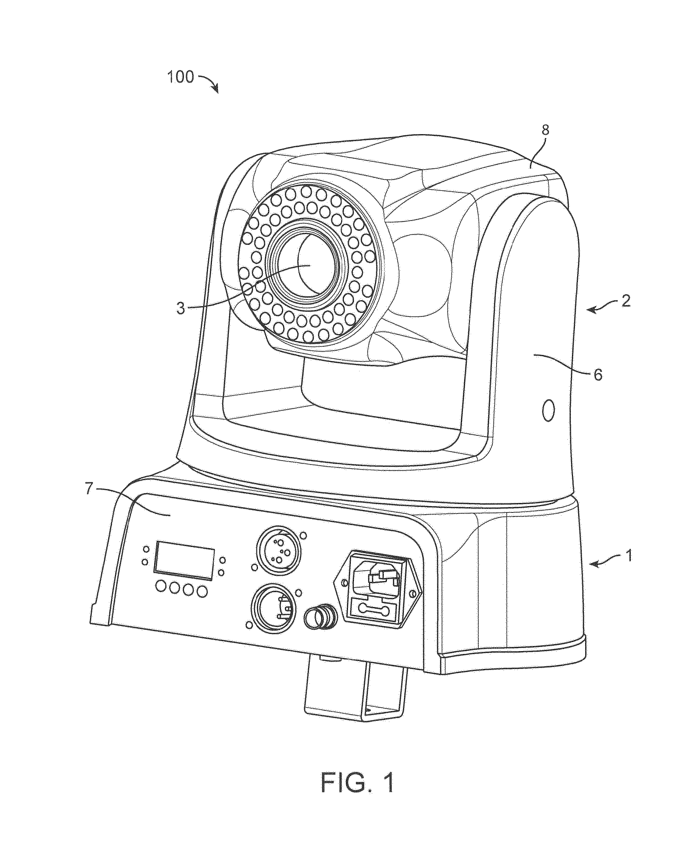

**FIG. 1** illustrates a front upright perspective view of a LED video camera system 100, in accordance with an embodiment of the invention. The LED video camera system 100 comprises a camera controller apparatus 1 and a movable video camera apparatus 2.

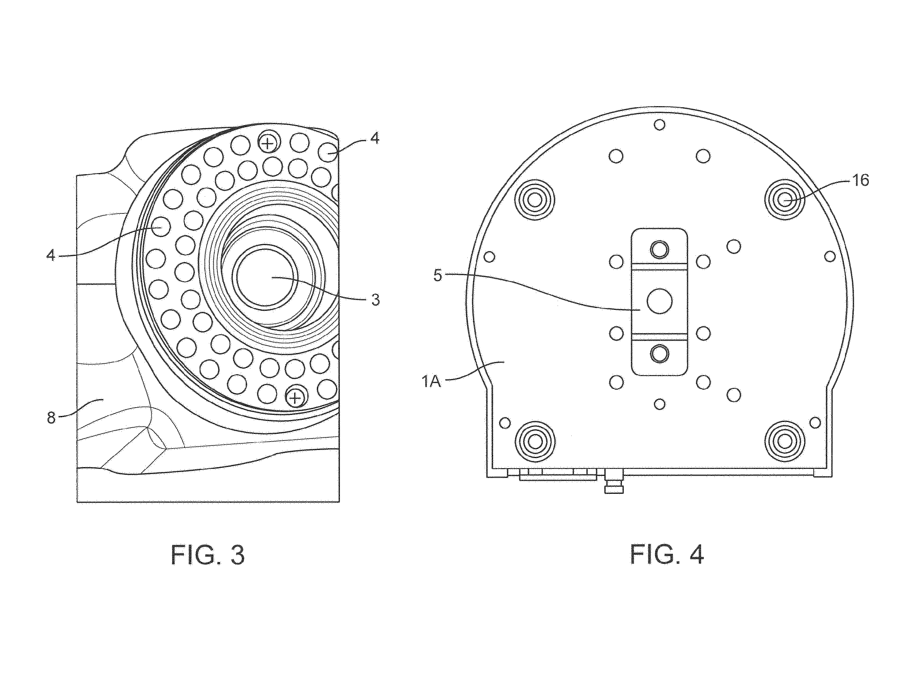

The movable video camera apparatus 2 comprises a video camera 8 and a support mechanism 6. The video camera 8 includes a lens 3. In one embodiment, the video camera 8 is a standard-definition video camera. In another embodiment, the video camera 8 is a high-definition video camera. A plurality of LED lights 4 (FIG. 3) are arranged around at least a portion of a periphery (i.e., circumference) of the lens 3 of the video camera 8 to illuminate objects that are the subject of the video camera 8. The LED lights 4 may comprise, for example, semiconductor LEDs or organic LEDs. Other light emitting elements, such as light bulbs, lasers, or liquid crystal display (LCD) panels, may also be used.

The video camera 8 is pivotally coupled to the support mechanism 6. The support mechanism 8 is shaped to support the video camera 8. In one embodiment, the support mechanism 6 is U-shaped.

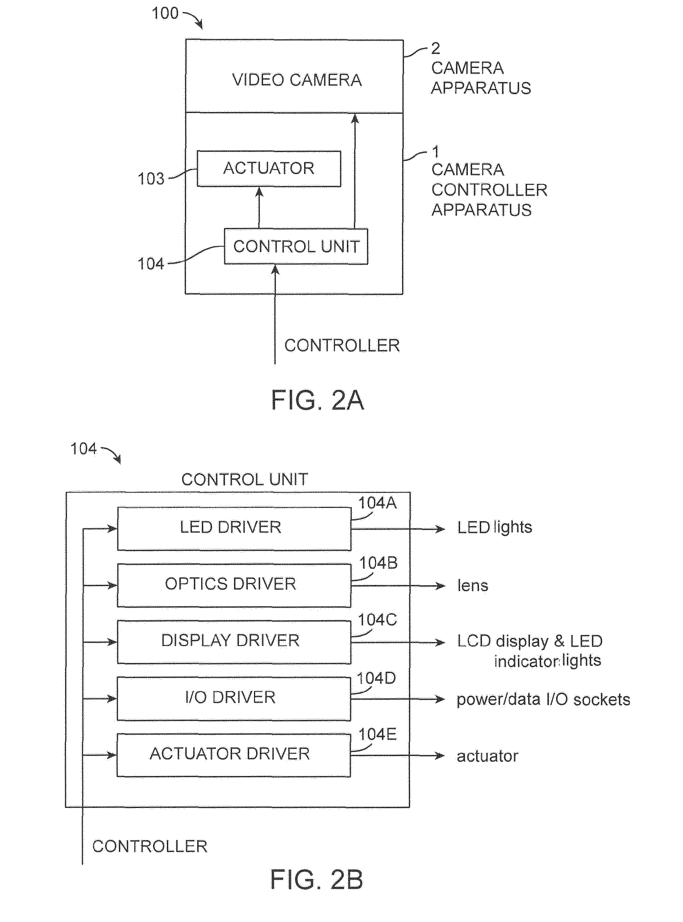

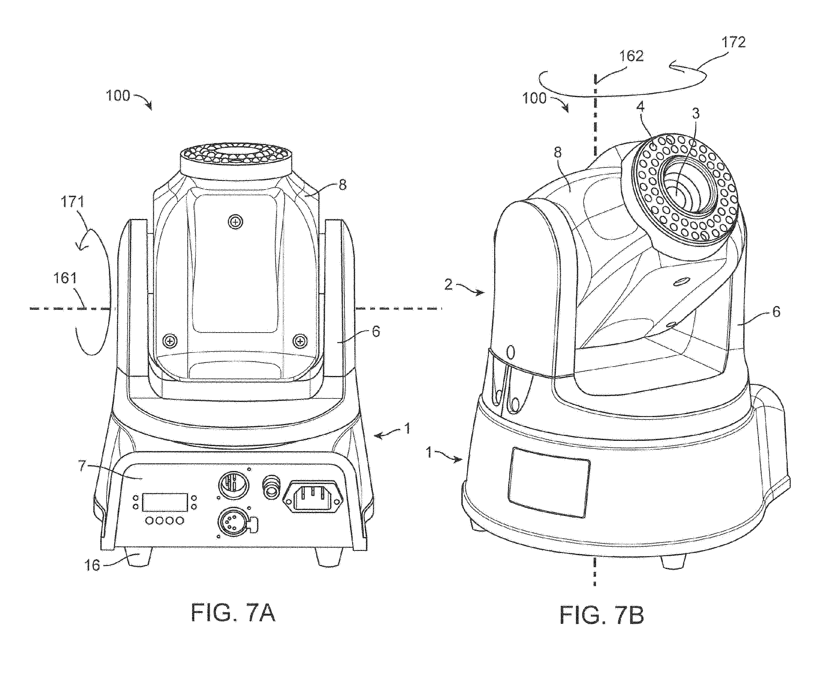

**FIG. 2A** is a block diagram illustrating components of a LED video camera system 100, in accordance with an embodiment of the invention. The camera controller apparatus 1 comprises an actuator 103 and a control unit 104. The actuator 3 moves and controls the support mechanism 6 (FIG. 1) and the video camera 8. The actuator 3 can rotate the video camera 8 in a pan direction 172 (FIG. 7B) or a tilt direction 171 (FIG. 7A).

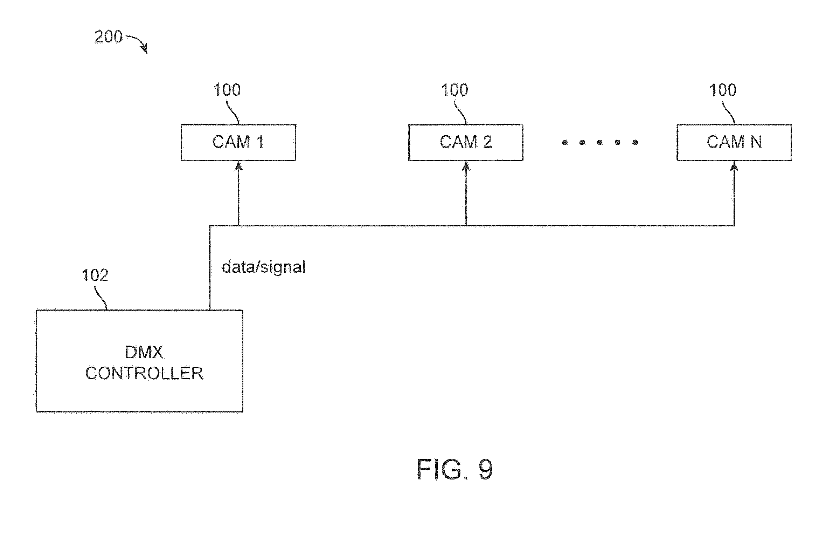

As later described in detail herein, the control unit 104 includes circuits/logic for controlling the actuator 103, the lens 3 of the video camera 8, and the LED lights 4. The control unit 104 receives data control signals (e.g., DMX signals) from a controller 102 (FIG. 9) or a DMX compliant device such as another LED video camera system 100. The control unit 104 controls the actuator 103, the lens 3 of the video camera 8, and the LED lights 4 based on the data control signals received. In one embodiment, the controller 102 may be a DMX controller such as a DMX512 controller.

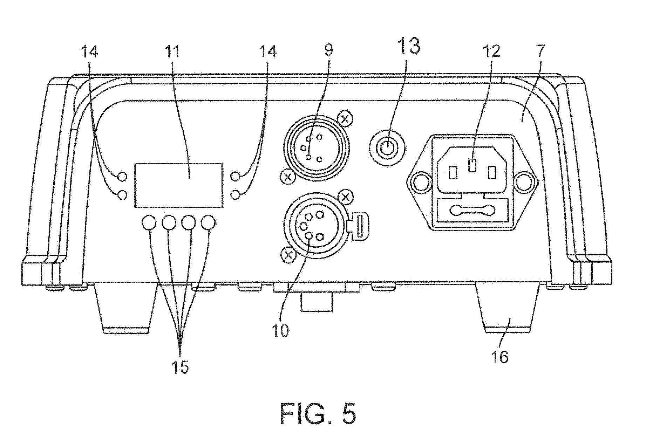

The camera controller apparatus 1 further comprises an interface board 7 (FIG. 5). As later described in detail herein, the interface board 7 includes multiple electrical connectors/sockets to interface with data and power inputs/outputs. In one embodiment, the interface board 7 includes a power socket 12 2 (FIG. 5) for receiving power from a power supply, a data input socket 9 (FIG. 5) for receiving data control signals such as Digital Multiplex (DMX) signals, and a data output socket 10 (FIG. 5) for transmitting data control signals such as DMX signals. DMX is a communications protocol allowing different devices to be linked together and operated from a single controller 102 (FIG. 9), provided that the devices and the controller are DMX compliant. The interface board 7 further includes an LCD display screen 11 (FIG. 5), multiple LED indicator lights 14 (FIG. 5), and multiple manual control buttons 15 (FIG. 5) which a user can utilize to display and control different operating functions of the LED video camera system 100.

**FIG. 2B** is a block diagram illustrating components of a control unit 104, in accordance with an embodiment of the invention. The control unit 104 comprises a plurality of drivers, such as a LED driver 104A, an optics driver 104B, a display driver 104C, a power/data input/output (I/O) driver 104D, and an actuator driver 104E.

The LED driver 104A controls the lighting effects of the LED lights 4 (FIG. 3) to illuminate objects that are the subject of the video camera 8 (FIG. 1). For example, the LED driver 104A can selectively turn on or turn off each LED light 4. The LED driver 4 can also selectively adjust the color temperature or brightness of each LED light 4.

The optics driver 104B controls the lens 3 (FIG. 1) of the video camera 8 (FIG. 1). For example, the optics driver 104B controls the zooming and focusing of the lens 103. The display driver 104C controls the LCD display screen 11 (FIG. 5), the LED indicator lights 14 (FIG. 5), and the manual control buttons 15 of the interface board 7 (FIG. 5). The power/data I/O driver 104D controls the power socket 12 (FIG. 5), the data input socket 9 (FIG. 5), and the data output socket 10 (FIG. 5) of the interface board 7.

The actuator driver 104E controls movement of the actuator 103 (FIG. 2A). As stated above, the actuator 3 positions the support mechanism 6 (FIG. 1) and the video camera 8 of the camera apparatus 2. The actuator driver 104E controls the actuator 103 which in turn pans and/or tilts the video camera 8 to a desired orientation. The actuator driver 104E also controls the speed at which the actuator pans and/or tilts the video camera 8.

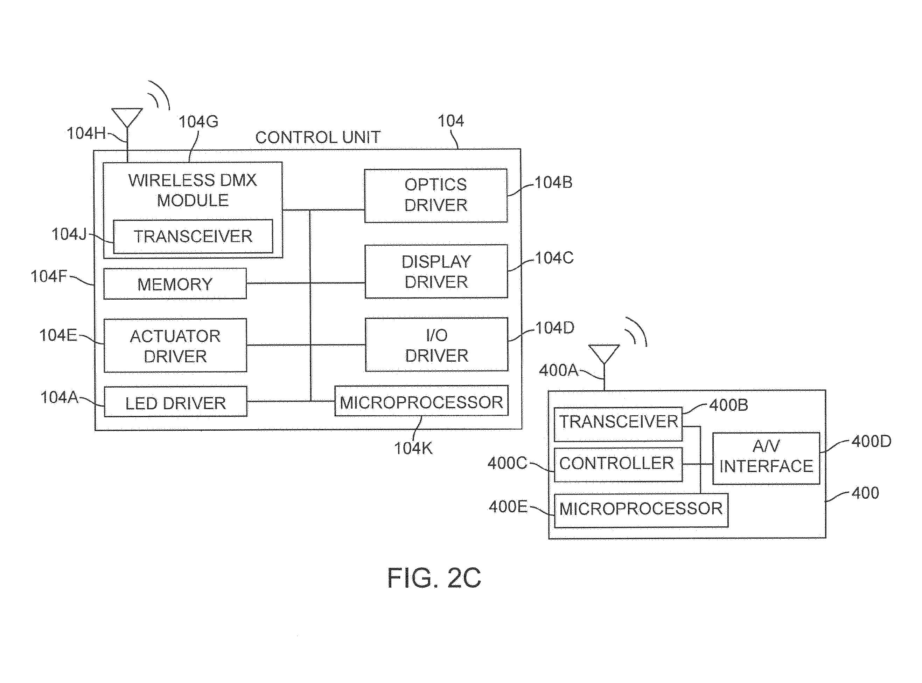

**FIG. 2C** is a block diagram illustrating a control unit 104 of a LED video camera system 100, wherein the control unit 104 includes a wireless DMX (Digital Multiplex) module 104G for wirelessly receiving DMX data signals from a remote wireless DMX controller 400, in accordance with an embodiment of the invention. In one embodiment, the operating functions of the LED video camera system 100 may also be wirelessly controlled using a remote wireless DMX controller 400. The control unit 104 comprises a plurality of drivers, such as a LED driver 104A, an optics driver 104B, a display driver 104C, a power/data input/output (I/O) driver 104D, an actuator driver 104E, a wireless DMX module 104G, a memory unit 104F, and a microprocessor 104K.

The LED driver 104A controls the lighting effects of the LED lights 4 (FIG. 3) to illuminate objects that are the subject of the video camera 8 (FIG. 1). For example, the LED driver 104A can selectively turn on or turn off each LED light 4. The LED driver 4 can also selectively adjust the color temperature or brightness of each LED light 4.

The optics driver 104B controls the lens 3 (FIG. 1) of the video camera 8 (FIG. 1). For example, the optics driver 104B controls the zooming and focusing of the lens 103. The display driver 104C controls the LCD display screen 11 (FIG. 5), the LED indicator lights 14 (FIG. 5), and the manual control buttons 15 of the interface board 7 (FIG. 5). The power/data I/O driver 104D controls the power socket 12 (FIG. 5), the data input socket 9 (FIG. 5), and the data output socket 10 (FIG. 5) of the interface board 7.

The actuator driver 104E controls movement of the actuator 103 (FIG. 2A). As stated above, the actuator 3 positions the support mechanism 6 (FIG. 1) and the video camera 8 of the camera apparatus 2. The actuator driver 104E controls the actuator 103 which in turn pans and/or tilts the video camera 8 to a desired orientation. The actuator driver 104E also controls the speed at which the actuator pans and/or tilts the video camera 8.

The wireless DMX module 104G is configured to wirelessly communicate/exchange information (e.g., data control signals) with a wireless DMX controller 400. In one embodiment, the wireless DMX module 104G operates on one or more radio frequencies. The wireless DMX module 104G includes an antenna 104H and a wireless transceiver 104J. The antenna 104H and the transceiver 104J are configured to wirelessly receive radio frequency (RF) signals from, and wirelessly transmit RF signals to, a wireless transceiver 400B of a wireless DMX controller 400. The RF signals received include data control signals such as DMX signals. In another embodiment, the antenna 104H and the transceiver 104J wirelessly exchange information (e.g., data control signals) with a wireless DMX controller 400 using infrared (I/R) waves.

The microprocessor 104K is configured to process the data control signals received. The memory unit 104F maintains information such as a DMX address of the LED video camera system 100.

As shown in FIG. 2C, a wireless DMX controller 400 comprises an antenna 400A, a wireless transceiver 400B, a controller 400C, a microprocessor 400E, and an A/V interface 400D. The A/V interface 400D of the wireless DMX controller 400 may comprise a graphic display, and alphanumeric and directional keypads that a user can use to enter input commands. The A/V interface 400D may comprise other types of electronic or manual data input means. The microprocessor 400E of the remote wireless DMX controller 400 is configured to process the input commands entered and generate the appropriate data control signals. The controller 400C of the wireless DMX controller 400 is configured to generate RF signals including the data controls signals generated.

The antenna 400A and the transceiver 400B of the wireless DMX controller 400 are configured to wirelessly communicate/exchange information (e.g., data control signals) with the wireless DMX module 104G of the control unit 104. In one embodiment, the antenna 400A and the transceiver 400B operate on one or more radio frequencies. The antenna 400A and the transceiver 400B wirelessly receive RF signals from, and wirelessly transmit RF signals to, the wireless DMX module 104G. In another embodiment, the antenna 400A and the transceiver 400B wirelessly exchange information (e.g., data control signals) with the wireless DMX module 104G using infrared (I/R) waves.

**FIG. 3** illustrates a close-up view of a video camera 8 of a LED video camera system 100, in accordance with an embodiment of the invention. As described above, the video camera 8 includes the lens 3 and the LED lights 4 which are arranged around at least a portion of a periphery (i.e., circumference) of the lens 3 to illuminate objects that are the subject of the video camera 8. The lens 3 can be a zoom lens. The optics driver 104B (FIG. 2B) controls the zooming and focusing of the lens 103.

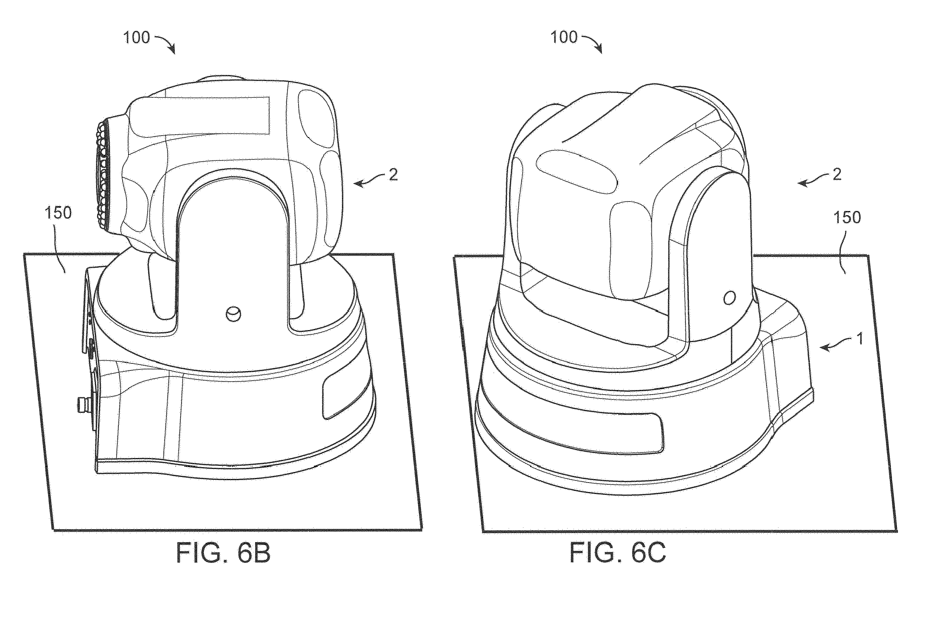

**FIG. 4** illustrates a bottom view of a LED video camera system 100, in accordance with an embodiment of the invention. Specifically, FIG. 4 illustrates an underside 1A of the camera controller apparatus 1. As shown in FIG. 4, the underside 1A includes a detachable mounting bracket 5 to allow the LED video camera system 100 to be affixed to a supporting surface or structure such as a floor stand, a wall, a lighting grid, a ceiling, or a truss. The underside 1A also includes a plurality of support members 16. The support members 16 are distributed evenly on the underside 1A to stabilize and support the LED video camera system 100 when the LED video camera system 100 is set upright on a flat supporting surface 150 (FIG. 6B).

**FIG. 5** illustrates an interface board 7 of a LED video camera system 100, in accordance with an embodiment of the invention. As stated above, the interface board 7 includes the power socket 12 for receiving power from a power supply, the data input socket 9 for receiving data control signals, and the data output socket 10 for transmitting data control signals.

In one embodiment, the data input socket 9 is a DMX input socket 9 (e.g., a 3-pin DMX input connector or a 5-pin DMX input connector), and the data output socket 10 is a DMX output socket 10 (e.g., a 3-pin DMX output connector or a 5-pin DMX output connector). DMX signals received via the DMX input socket 9 comprise DMX data instructions from a DMX compliant controller 102 (FIG. 9), such as a DMX512 2 controller. The LED video camera system 100 may have a DMX address (e.g., a DMX512 address) used to route DMX signals thereto from the controller 102. The DMX output socket 10 transmits DMX signals to another DMX compliant device such as another LED video camera system 100.

The DMX signals received are delivered to the drivers 104A (FIG. 2B), 104B (FIG. 2B), 104C (FIG. 2B), 104D (FIG. 2B), and 104E (FIG. 2B) for controlling different operating functions of the LED video camera system 100. These operating functions may include setting and displaying a DMX address for the LED video camera system 100, moving the actuator 103 to pan and/or tilt the video camera 8, setting the speed at which the video camera 8 is panned and/or tilted, zooming and/or focusing the lens 3, or controlling the lighting effects of the LED lights 4 such as selectively lighting the LED lights 4 or selectively adjusting the color temperature and/or brightness of the LED lights 4.

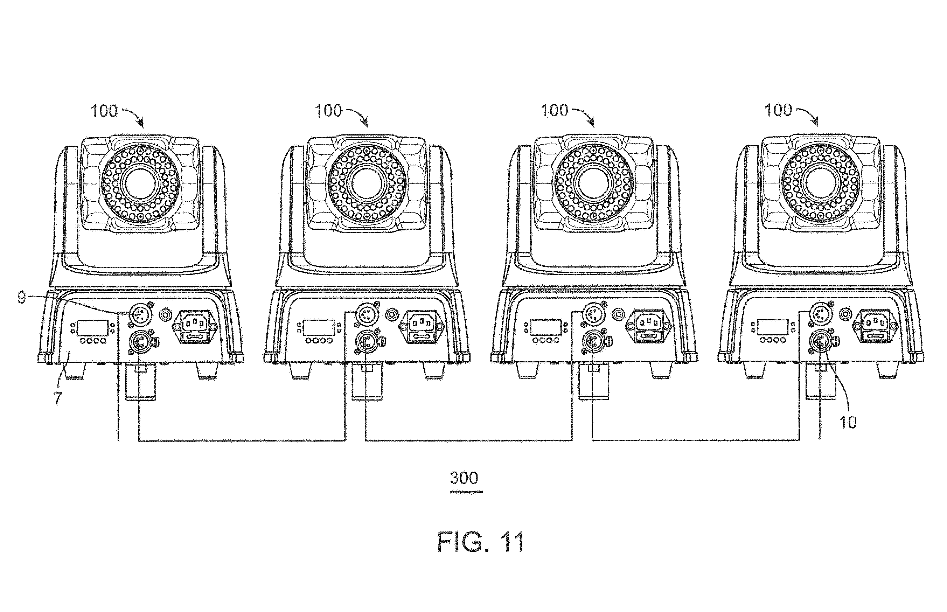

The LED video camera system 100 can be used as a stand alone, in multiples such as in a parallel video capture circuit 200 (FIG. 9), or linked in a master/slave configuration such as a daisy-chain (i.e., serial) video capture circuit 300 (FIG. 11). In the daisy-chain circuit 300, DMX control signals are sent as serial data that travel from one LED video camera system 100 to another LED video camera system 100 via the DMX I/O sockets 9, 10 of each LED video camera system 100. Specifically, the DMX input socket 9 receives master/slave DMX signals and the DMX output socket 10 transmits master/slave DMX signal to the next LED video camera system 100 in the master/slave circuit 300. Each LED video camera system 100 may have a unique DMX address used to route DMX signals thereto.

As shown in FIG. 5, the interface board 7 further includes the LCD display screen 11, the manual control buttons 15, and the LED indicator lights 14. The LCD display screen 11, the LED indicator lights 14, and the manual control buttons 15 can be operated by a user to display and control different operating functions of the LED video camera system 100.

As shown in FIG. 5, the interface board 7 further includes a video output coupler 13 (e.g., a BNC video output coupler). The video output coupler 13 transmits video signals to a projector or a display device (e.g., a television) such that video captured by the video camera 8 (FIG. 1) can be projected by the projector or displayed on the display device.

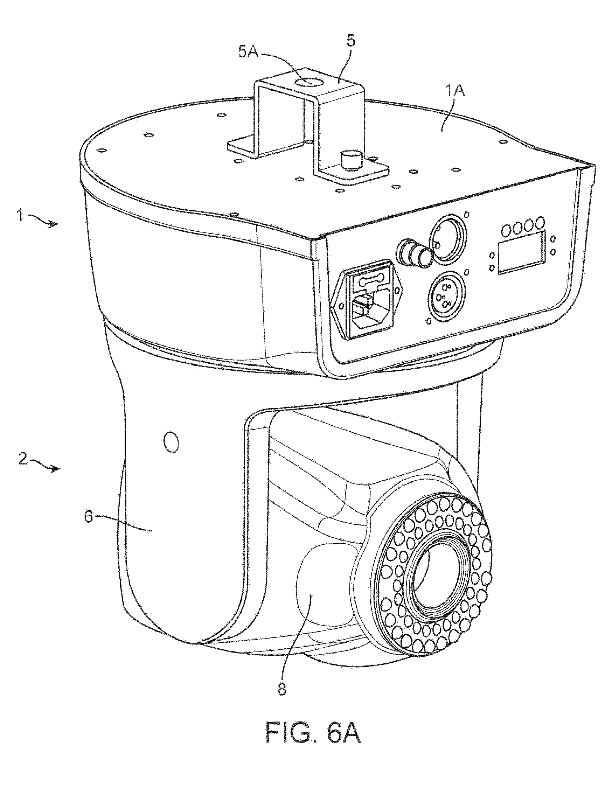

**FIG. 6A** illustrates a front upside-down perspective view of a LED video camera system 100, in accordance with an embodiment of the invention. As stated above, the underside 1A of the camera controller apparatus 1 (FIG. 1) includes the mounting bracket 5 which allows for the LED video camera system 100 to be affixed to a supporting surface or structure such as a floor stand, a wall, a lighting grid, a ceiling, or a truss. The mounting bracket includes an aperture 5A through which a fastener (e.g., a screw) can be inserted to secure the mounting bracket 5 and the LED video camera system 100 to a supporting surface or structure. As shown in FIG. 6A, the video camera 8 is positioned in a forward-looking position. The actuator 103 can tilt the video camera 8 from a forward-looking position to a downward-looking/upward-looking position.

**FIG. 6B** illustrates a side perspective view of a LED video camera system 100, in accordance with an embodiment of the invention. **FIG. 6C** illustrates a back perspective view of a LED video camera system 100, in accordance with an embodiment of the invention. As shown in FIGS. 6B-6C, the video camera 8 (FIG. 1) is positioned in a forward-looking position. As stated above, the LED video camera system 100 can also be set on a flat supporting surface 150, such a table or the ground.

**FIGS. 7A-8F** illustrate an example of the range of panning and/or tilting motion of a video camera 8 of a LED video camera system 100, in accordance with an embodiment of the invention.

Specifically, **FIG. 7A** illustrates a front view of a LED video camera system 100, wherein a video camera 8 of the LED video camera system 100 is tilted about a substantially ninety degree angle from a forward-looking position to an upward-looking position, in accordance with an embodiment of the invention. **FIG. 7B** illustrates a back perspective view of a LED video camera system 100, wherein a video camera 8 of the LED video camera system 100 is panned about a substantially ninety degree angle and tilted about a substantially forty-five degree angle from a forward-looking position, in accordance with an embodiment of the invention. The actuator 103 of the LED video camera system 100 can pan the video camera 8 about a substantially five hundred forty degree angle (540°) about a vertical axis 162. For example, the actuator 103 can pan the video camera 8 from a forward-looking position to a backward-looking position. The actuator 103 of the LED video camera system 100 can also tilt the video camera 8 about a substantially two hundred and seventy degree angle (270°) about a horizontal axis 161. For example, the actuator 103 can tilt the video camera 8 from a forward-looking position to a downward-looking/upward-looking position.

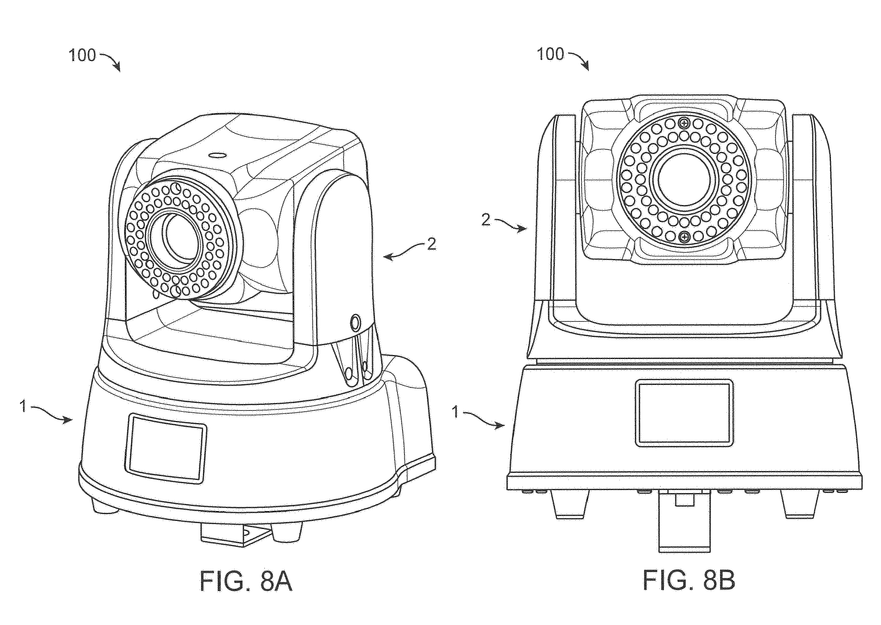

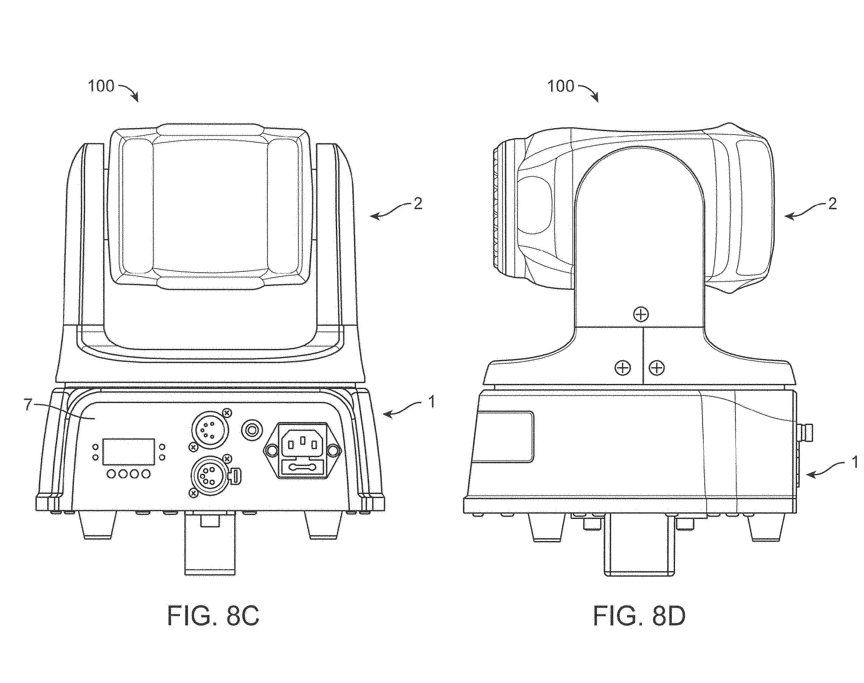

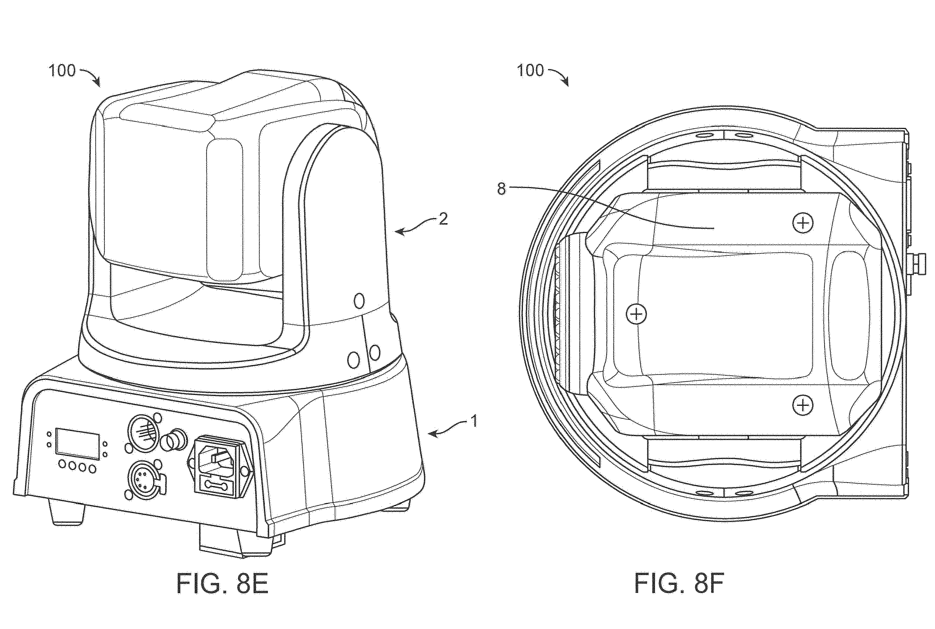

FIGS. 8A-8F illustrate multiple views of a LED video camera system 100, wherein a video camera 8 of the LED video camera system 100 is panned about a substantially one-hundred eighty degree angle from a forward-looking position to a backward-looking position, in accordance with an embodiment of the invention. Specifically, **FIG. 8A** illustrates a back perspective view of the LED video camera system 100. **FIG. 8B** illustrates a back view of the LED video camera system 100. **FIG. 8C** illustrates a front view of the LED video camera system 100. **FIG. 8D** illustrates a side view of the LED video camera system 100. **FIG. 8E** illustrates an alternate side perspective view of the LED video camera system 100. **FIG. 8F** illustrates a top view of the LED video camera system 100.

As stated above, the LED video camera system 100 can be used as a stand alone, in multiples such as in a parallel video capture circuit 200 (FIG. 9), or linked in a master/slave configuration such as a daisy-chain (i.e., serial) video capture circuit 300 (FIG. 11).

**FIG. 9** is a block diagram illustrating multiple LED video camera systems 100 arranged in a parallel video capture circuit 200, in accordance with an embodiment of the invention. The circuit 200 is controlled by a controller 102, such as a DMX compliant controller. Each LED video camera system 100 receives data control signals (e.g., DMX signals) from the controller 102 via the data input socket 9 (FIG. 5).

Each LED video camera system 100 in the circuit 200 may also be wirelessly controlled by a wireless DMX controller 400 (FIG. 2C). As described above and illustrated in FIG. 2C, a wireless DMX module 104G of each LED video camera system 100 can wirelessly receive data control signals (e.g., DMX signals) from with a wireless DMX controller 400.

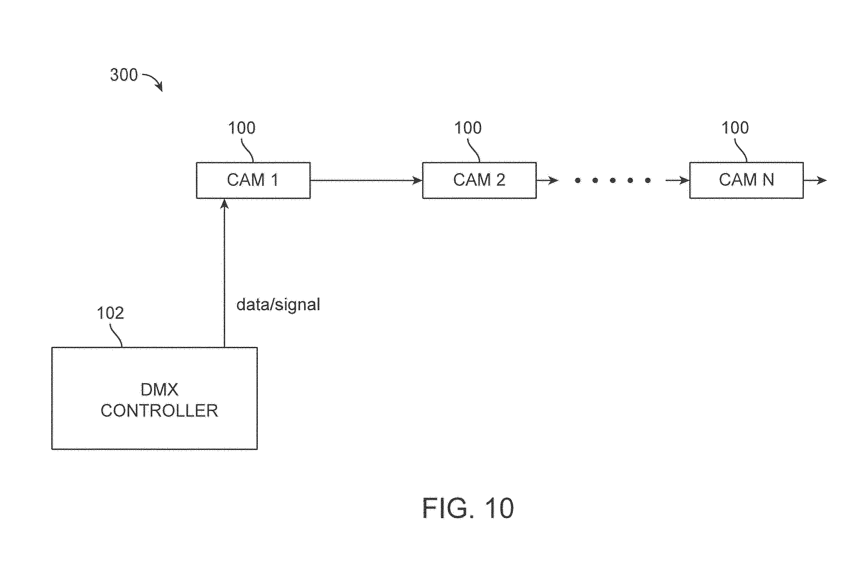

**FIG. 10** is a block diagram illustrating multiple LED video camera systems 100 linked in a daisy-chain video capture circuit 300, in accordance with an embodiment of the invention. **FIG. 11** illustrates the daisy-chain video capture circuit 300 in FIG. 10. The circuit 300 is controlled by a controller 102, such as a DMX compliant controller. In the daisy-chain circuit 300, data control signals (e.g., DMX signals) are sent as serial data that travel from one LED video camera system 100 to another LED video camera system 100 via the data I/O sockets 9, 10 (FIG. 5) of each LED video camera system 100. Specifically, the data input socket 9 receives master/slave data control signals and the data output socket 10 transmits master/slave data control signals to the next LED video camera system 100 in the master/slave circuit 300. For example, as shown in FIG. 10, a first LED video camera system 100 (CAM 1) receives data control signals from the controller 102. The first LED video camera system 100 then transmits data control signals to a second LED video camera system 100 (CAM 2).

Each LED video camera system 100 in the circuit 300 may also be wirelessly controlled by a wireless DMX controller 400 (FIG. 2C). As described above and illustrated in FIG. 2C, a wireless DMX module 104G of each LED video camera system 100 can wirelessly receive data control signals (e.g., DMX signals) from with a wireless DMX controller 400.

The present invention has been described in considerable detail with reference to certain preferred versions thereof; however, other versions are possible. The above description is made for the purpose of illustrating the general principles of the present invention and is not meant to limit the inventive concepts claimed herein. Further, particular features described above can be used in combination with other described features in each of the various possible combinations and permutations. Unless otherwise specifically defined herein, all terms should be given their broadest possible interpretation including meanings implied from the specification as well as meanings understood by those skilled in the art and/or as defined in dictionaries, treatises, etc. Therefore, the spirit and scope of the appended claims should not be limited to the description of the preferred versions contained herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A light emitting diode (LED) video camera system, comprising:
a movable video camera apparatus comprising:
a video camera having a lens; and
a plurality of LED lights, wherein the LED lights are arranged around at least a portion of a periphery of the lens of the video camera;
an actuator for moving the camera apparatus including panning and tilting the video camera; and
a control unit for controlling the actuator, the lens of the video camera, and the LED lights.

2. The LED video camera system of claim 1, wherein:
the control unit comprises a plurality of drivers; and
said plurality of drivers include:
an LED driver for controlling lighting effects of the LED lights;
an actuator driver for controlling movement of the actuator; and
an optics driver for controlling zooming and focusing of the lens of the video camera.

3. The LED video camera system of claim 1 or claim 2, further comprising:
an interface board, wherein the interface board comprises:
a power socket for receiving power;
a video output coupler for transmitting video signals including video captured by the video camera;
a data input socket for receiving data control signals; and
a data output socket for transmitting data control signals;
optionally wherein the control unit controls the actuator, the lens of the video camera, and the LED lights based on the data control signals received.

4. The LED video camera system of claim 3, wherein the data input socket receives data control signals from a controller;
optionally wherein:
the controller is a Digital Multiplex (DMX) controller; and
the received data control signals include DMX data instructions.

5. The LED video camera system of claim 3 or claim 4, wherein the interface board further comprises:
an LCD display screen;
a plurality of manual control buttons; and
a plurality of LED indicator lights;
wherein a user can utilize the LCD display screen, the buttons, and the indicator lights to control the lighting effects of the LED lights, the movement of the actuator, and the zooming and focusing of the lens of the video camera.

6. The LED video camera system of any one of claims 1 to 5, further comprising either:
a detachable mounting bracket for mounting the LED video camera system to one of the following supporting surfaces or structures: a floor stand, a wall, a lighting grid, a ceiling, and a truss; or
a wireless DMX module for wirelessly receiving data control signals including DMX data instructions from a wireless DMX controller.

7. A light emitting diode (LED) video camera fixture system, comprising:
a plurality of LED video camera fixtures;
each LED video camera fixture comprising:
a movable video camera apparatus including a video camera having a lens;
said camera apparatus further including a plurality of LED lights arranged around at least a portion of a periphery of the lens of the video camera;
an actuator for moving said camera apparatus including panning and tilting the video camera; and
a control unit for controlling the actuator, the lens of the video camera, and the LED lights.

8. The LED video camera fixture system of claim 7, wherein the control unit of each LED video camera fixture comprises:
a plurality of drivers, wherein said plurality of drivers include:
an LED driver for controlling lighting effects of the LED lights of said LED video camera fixture;
an actuator driver for controlling movement of the actuator of said LED video camera fixture; and
an optics driver for controlling zooming and focusing of the lens of the video camera of said LED video camera fixture.

9. The LED video camera fixture system of claim 7 or claim 8, wherein each LED video camera fixture further comprises:
an interface board, wherein the interface board comprises:
a power socket for receiving power;
a video output coupler for transmitting video signals including video captured by the video camera of said LED video camera fixture;
a data input socket for receiving data control signals; and
a data output socket for transmitting data control signals;
optionally wherein the control unit of each LED video camera fixture controls the actuator, the lens of the video camera, and the LED lights of said LED video camera fixture based on the data control signals received.

10. The LED video camera fixture system of claim 9, wherein:
the data input socket of each LED video camera fixture receives data control signals from one of the following: a controller, and another LED video camera fixture;
optionally, wherein:
the controller is a Digital Multiplex (DMX) controller; and
the received data control signals include DMX data instructions.

11. The LED video camera fixture system of claim 9 or claim 10, wherein the interface board of each LED video camera fixture further comprises:
an LCD display screen;
a plurality of manual control buttons; and
a plurality of LED indicator lights;
wherein a user can utilize the LCD display screen, the buttons, and the indicator lights of said LED video camera fixture to control the lighting effects of the LED lights of said LED video camera fixture, the movement of the actuator of said LED video camera fixture, and the zooming and focusing of the lens of the video camera of said LED video camera fixture.

12. The LED video camera fixture system of any one of claims 7 to 11, wherein each LED video camera fixture further comprises either:
a detachable mounting bracket for mounting said LED video camera fixture to one of the following supporting surfaces or structures: a floor stand, a wall, a lighting grid, a ceiling, and a truss; or
a wireless DMX module for wirelessly receiving data control signals including DMX data instructions from a wireless DMX controller.

13. The LED video camera system of any one of claims 1 to 6 or the LED video camera fixture system of any one of claims 7 to 12, wherein the or each actuator can:
pan its respective video camera about a substantially five hundred and forty degree angle about a vertical axis; and
tilt its respective video camera about a substantially two hundred and seventy degree angle about a horizontal axis.

14. A method of forming a movable light emitting diode (LED) video camera system , the method comprising:
providing a video camera having a lens;
arranging a plurality of LED lights around at least a portion of a periphery of the lens of the video camera;
panning and tilting the video camera using an actuator; and
controlling the actuator, the lens of the video camera, and the LED lights using a control unit.

15. The method of claim 14, further comprising:
receiving power via a power socket;
receiving data control signals from a controller via a data input socket;
transmitting video signals including video captured by the video camera via a video output coupler; and
transmitting data control signals via a data output socket;
wherein the control unit controls the actuator, the lens of the video camera, and the LED lights based on the data control signals received;
optionally wherein the method further comprises:
wirelessly receiving data control signals from a wireless DMX controller via a wireless DMX module.
